# EUROPÄISCHE PATENTSCHRIFT

(11) **EP 0 313 738 B1**
(45) Veröffentlichungstag und Bekanntmachung des Hinweises auf die Patenterteilung: **01.12.1993**
(21) Anmeldenummer: 88112216.2
(22) Anmeldetag: 28.07.1988
(51) Int. Cl.: H04B 10/24, H04B 10/00

(54) **Verfahren zur bidirektionalen Uebertragung optischer Signale ueber Lichtwellenleiter**
Method for bidirectionnally transmitting optical signals over optical fibres
Procédé de transmission bidirectionnelle de signaux optiques au moyens de fibres optiques

(30) Priorität: 24.10.1987 DE 3736082
(43) Veröffentlichungstag der Anmeldung: 03.05.1989
(73) Patentinhaber: KE KOMMUNIKATIONS-ELEKTRONIK GMBH & CO, D-30179 Hannover (DE)
(72) Erfinder: Brahms, Martin, Dipl.-Ing., D-3000 Hannover 91 (DE); Chahabadi, Ziaedin, Dr.-Ing., D-3252 Bad Münder 1 (DE); Ocker, Johannes, Ing. (grad), D-3000 Hannover 91 (DE)
(74) Vertreter: Döring, Roger, Dipl.-Ing.

(56) Entgegenhaltungen:
- EP-A- 0 120 457
- EP-A- 0 141 191
- DE-A- 3 545 194
- GB-A- 2 042 804
- PATENT ABSTRACTS OF JAPAN, Band 6, Nr. 189 (E-133)[1067], 28. September 1982 & JP-A-57 103 445

## Beschreibung

Die Erfindung bezieht sich auf ein Verfahren zur bidirektionalen Übertragung optischer Signale zwischen zwei durch einen Lichtwellenleiter verbundenen Stationen, bei welchem die Signale jeweils von einem in den Stationen angeordneten optischen Sender ausgesandt und am Ende der jeweils durch den Lichtwellenleiter gebildeten Übertragungsstrecke in den Stationen empfangen werden, bei welchem die Signale der einen Senderichtung in Sendepausen der anderen Senderichtung über den Lichtwellenleiter übertragen werden, bei welchem als optischer Sender ein eine Sendediode und eine Fotodiode aufweisendes optisches Bauteil verwendet wird und bei welchem die Fotodiode in jeder Station während des Sendebetriebs als Monitordiode zur Überwachung der Sendediode und während des Empfangsbetriebs als Empfänger verwendet wird, der in den Sendepausen der eigenen Station die von einer anderen Station kommenden Signale empfängt (EP-A-0 120 457).

Nach diesem Verfahren arbeiten heute alle optischen Übertragungssysteme im Nachrichtenbereich, bei denen die Signale bzw. Daten über Lichtwellenleiter - im folgenden kurz "LWL" genannt - übertragen werden. Zum Aussenden der Signale werden in bekannter Technik beispielsweise Laserdioden oder auch Lasermodule verwendet, in denen eine Laserdiode und eine zur Kontrolle derselben verwendete Monitordiode vereinigt sind. Ein solcher Lasermodul geht beispielsweise aus der DE-Z "Wiss. Ber. AEG-TELEFUNKEN 53 (1980) 1-2", Seite 56 hervor. Mittels der Monitordiode und einem zugehörigen Regler kann die Leistung der Laserdiode geregelt beziehungsweise kontrolliert werden. Das ist bei einer Laserdiode ohne Monitordiode nur mit erheblichem schaltungstechnischem Aufwand möglich. Fertigungsbedingte Streuungen bei der Herstellung der Laserdiode sowie Temperatur- und Alterungseinflüsse können durch die Monitordiode auf einfache Weise ausgeregelt werden. Diese Faktoren können sich daher auf die Leistung der in einem Lasermodul befindlichen Laserdiode nicht auswirken.

In der GB-A-2 000 373, ist eine Diode beschrieben, die sowohl als Sendediode als auch als Empfangsdiode für Licht der gleichen Wellenlänge eingesetzt werden kann. In der Druckschrift ist auch erwähnt, daß solche Dioden zum wechselweisen Betrieb an zwei Enden einer optischen Faser angeordnet und je nach Betriebsart umgeschaltet werden können. Weitere Angaben bezüglich der Übertragung des Lichts sind der Druckschrift nicht zu entnehmen.

Die DE-A-3 203 094 beschreibt eine Leuchtdiodenschaltung für den Halbduplex-Betrieb. Mit dieser Schaltung können Informationen über einen LWL in beiden Richtungen übertragen werden. Sowohl als Sender als auch als Empfänger wird dabei die gleiche Leuchtdiode verwendet. Sie wird mittels einer Transistorschaltung entweder als Sender oder als Empfänger geschaltet. Diese bekannte Schaltung arbeitet im Empfangsbetrieb mit geringem Wirkungsgrad, da die Leuchtdiode als Sendediode und nicht als Empfangsdiode konzipiert ist. Die Übertragung von Informationen über den LWL ist dadurch auf relativ kurze Strecken beschränkt, weil das Empfangssignal nur mit geringem Wirkungsgrad umgesetzt wird. Ein Einsatz der bekannten Schaltung in der Nachrichtentechnik mit ihren hohen Bitraten ist daher nicht möglich.

Bei dem Verfahren nach der DE-A-2 905 734 wird als optischer Sender, der gleichzeitig Empfänger ist, ein lichtaussendendes Halbleiterelement verwendet, bei dem es sich um eine Diode handeln kann. Hier gilt das gleiche wie für die Leuchtdiode bei der Schaltung nach der DE-A-3 203 094 Auch dieses Halbleiterelement ist als sendendes Bauteil konzipiert. Es kann das Empfangssignal nur mit geringem Wirkungsgrad umsetzen. In der Schaltung dieses bekannten Verfahrens ist außerdem als Eingangsverstärker ein Operationsverstärker eingesetzt, bei dem es sich um ein für schwache Signale nicht ausreichend empfindliches Bauteil handelt. Auch dieses bekannte Verfahren ist daher nur für kurze Strecken, beispielsweise in Kraftfahrzeugen, und niedrige Bitraten mit ausreichend starken Empfangssignalen einsetzbar.

Bei dem Verfahren nach der eingangs erwähnten EP-A-0 120 457 wird als optischer Sender ein Bauteil verwendet, daß aus einer Fotodiode mit einem Loch und aus einer im Bereich des Lochs der Fotodiode liegenden Leuchtdiode besteht. Leuchtdiode und Fotodiode sind miteinander verklebt. Der Lichtwellenleiter endet im Loch der Fotodiode. Das aus dem Lichtwellenleiter austretende Licht gelangt durch Streuung und Reflexion zu der als Empfänger vorgesehenen Fotodiode.

Der Erfindung liegt die Aufgabe zugrunde, das eingangs beschriebene Verfahren so zu verbessern, daß es mit verbessertem Wirkungsgrad arbeitet.

Diese Aufgabe wird gemäß der Erfindung dadurch gelöst,
- daß als optisches Bauteil ein aus Laserdiode als Sendediode und Monitordiode bestehender Lasermodul verwendet wird,
- daß der über die Monitordiode fließende, der empfangenen Lichtleistung proportionale Strom über einen Verstärker einem Empfänger zugeführt wird und
- daß zwischen Monitordiode und Verstärker ein Schalter angeordnet wird, der nur in den Sendepausen des zugehörigen Lasermoduls geschlossen wird.

Bei diesem Verfahren wird ein an sich bekannter Lasermodul verwendet, der gegenüber einer Laserdiode und anderen Licht aussendenden Halbleitern den Vorteil hat, daß die Leistung seiner Laserdiode auf einfache Weise mittels der Monitordiode geregelt wird. Die Monitordiode ist dabei im Lasermodul als Empfangsdiode eingesetzt und dementsprechend auch als solche konzipiert. Sie ist also für den Empfang optischer Signale optimiert und setzt Empfangssignale mit hohem Wirkungsgrad um. Das Verfahren ist dadurch auch für große Übertragungsstrecken und hohe Bitraten geeignet. Auch schwache Empfangssignale werden durch die Monitordiode noch empfangen und einwandfrei umgesetzt. Schaltungstechnisch muß am Lasermodul und insbesondere an der Monitordiode zwischen Sendebetrieb und Empfangsbetrieb nichts geändert werden, da die Monitordiode in beiden Fällen als Empfangsdiode geschaltet ist. Im Empfangsbetrieb muß nur ein geeigneter Empfänger in den Stromkreis der Monitordiode eingeschaltet werden. Die von der Monitordiode empfangene Lichtleistung wird dem Empfänger über den Verstärker zugeführt. Zum Schutz des Verstärkers gegen Übersteuerung ist zwischen demselben und der Monitordiode der Schalter vorgesehen, der nur in den Sendepausen des zugehörigen Lasermoduls, also im Empfangsbetrieb, geschlossen wird.

Die Laserdiode des Lasermoduls kann während des Empfangsbetriebs prinzipiell als eine Art Verstärkungselement für die empfangenen Signale verwendet werden.

Das Verfahren nach der Erfindung wird an Hand des in den Zeichnungen dargestellten Ausführungsbeispiels erläutert.

Es zeigen:
Fig. 1 in schematischer Darstellung eine Übertragungsstrecke mit einem LWL zur Durchführung des Verfahrens nach der Erfindung.
Fig. 2 ein Prinzipschaltbild eines für das Verfahren verwendbaren Lasermoduls.
Fig. 3 eine Schaltung zur Gewinnung von Empfangssignalen.

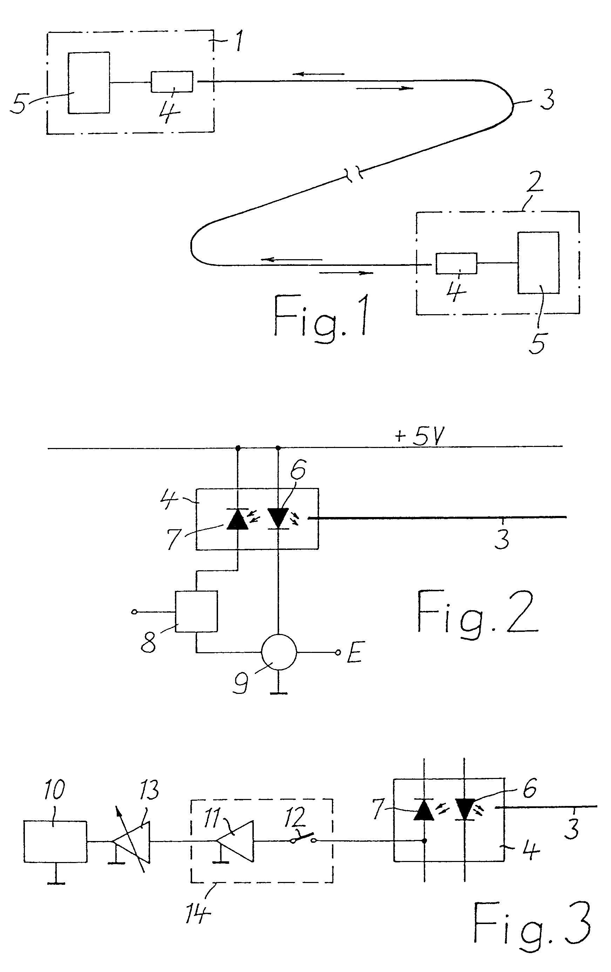

Mit 1 und 2 sind zwei Stationen bezeichnet, zwischen denen ein LWL 3 zur Übertragung optischer Signale der Nachrichtentechnik angeordnet ist. Der LWL 3 ist in beiden Stationen 1 und 2 an einen Lasermodul 4 angeschlossen, dessen genauerer Aufbau beispielsweise aus Fig. 2 hervorgeht. Sonstige, an sich bekannte Bauteile der Stationen 1 und 2 sind jeweils durch ein Kästchen 5 angedeutet. Über den LWL 3 werden die Signale in beiden Richtungen übertragen, und zwar derart, daß die Signale der einen Übertragungsrichtung in Sendepausen der anderen Übertragungsrichtung gesendet werden. Ein dafür verwendbares Übertragungsverfahren ist beispielsweise das aus der herkömmlichen Übertragungstechnik mit metallischen Leitern bekannte Zeitgetrenntlageverfahren. Die Signale können sowohl in analoger als auch in digitaler Form übertragen werden.

Zum Senden der Signale bzw. Daten wird nach Fig. 2 jeweils ein Lasermodul 4 verwendet, der eine als Lichtsender dienende Laserdiode 6 und eine Monitordiode 7 umfaßt. Die Laserdiode 6 wird aus einer Spannungsquelle gespeist, die beispielsweise eine Spannung von 5 V liefert. An die Laserdiode 6 ist auf deren Sendeseite der LWL 3 angeschlossen. Die Monitordiode 7 befindet sich auf der Kontrollseite der Laserdiode 6. An die Monitordiode 7 ist ein Regler 8 angeschlossen, dem als Sollwert eine Referenzspannung aufgegeben wird, welche einer Leistung der Laserdiode 6 von beispielsweise 0,25 mW entspricht. Der Regler 8 ist mit einem Stellglied 9 verbunden, das im Strompfad der Laserdiode 6 liegt. Zu sendende Signale bzw. Daten werden der Laserdiode 6 in bekannter Weise aufmoduliert. Sie können beispielweise über den Eingang E des Stellgliedes 9 zugeführt werden. Das Stellglied 9 kann beispielsweise ein beliebiger Transistor sein.

Bei der Übertragung von Signalen bzw. Daten sendet die Laserdiode 6 Licht bzw. Lichtimpulse in Richtung des LWL 3 einerseits und der Monitordiode 7 andererseits. Die Leistung des auf die Monitordiode 7 fallenden Lichts ist der Sendeleistung proportional. Der von der Monitordiode 7 gelieferte Strom wird im Regler 8 mit dem vorgegebenen Sollwert der entsprechenden Referenzspannung verglichen. Der Regler 8 bewirkt nach Maßgabe dieses Stromes über das Stellglied 9 ständig eine Anpassung des zur Laserdiode 6 fließenden Stroms, so daß die vorgegebene Lichtleistung der Laserdiode 6 eingehalten wird. Unter dem Wort "Lichtleistung" ist dabei die Sendeleistung der Laserdiode 6 zu verstehen.

In den Sendepausen wird von der Laserdiode 6 kein Licht ausgesandt. In dieser Zeit dient die Monitordiode 7 des Laserdomuls 4 als Empfänger für über den LWL 3 ankommende Signale. Die Monitordiode 7 eignet sich besonders zum Abgriff der Empfangssignale, weil sie ohnehin in Sperrichtung, also als Empfangsdiode, betrieben wird. Ein über den LWL 3 ankommendes Signal erzeugt in der Monitordiode 7 einen der Lichtleistung proportionalen Strom. Dieser Strom wird einem Empfänger 10 zugeführt, und zwar über einen Verstärker 11, der mittels eines Schalters 12 an die Monitordiode 7 anschaltbar ist. Der Verstärker 11 ist beispielsweise als Transimpedanzverstärker ausgebildet. Zwischen Empfänger 10 und Verstärker 11 kann noch ein geregelter Verstärker 13 zur Aussteuerung des Empfangssignals eingeschaltet sein.

Der Schalter 12 ist nur in den Sendepausen des zugehörigen Lasermoduls 4 geschlossen. Er wird geöffnet, wenn die Laserdiode 6 ein Burst sendet. Der Schalter 12 kann als beliebiger Transistor ausgeführt sein. Besonders geeignet ist ein kapazitätsarmer MOSFET. Verstärker 11 und Schalter 12 werden zweckmäßig zur Abschirmung in ein geschlossenes metallisches Gehäuse 14 eingekapselt, das in Fig. 3 durch eine gestrichelte Linie angedeutet ist.

Während des Empfangsbetriebs kann die Laserdiode 6 der empfangenden Station mit Strom versorgt werden, der kleiner als ihr Schwellenstrom ist. Der Wirkungsgrad des Verfahrens beim Empfang der Signale kann dadurch weiter verbessert werden. Die Laserdiode 6 arbeitet dann quasi in einer Verstärkerfunktion.

## Patentansprüche

1. Verfahren zur bidirektionalen Übertragung optischer Signale zwischen zwei durch einen Lichtwellenleiter (3) verbundenen Stationen (1,2), bei welchem die Signale jeweils von einem in den Stationen angeordneten optischen Sender ausgesandt und am Ende der durch den Lichtwellenleiter (3) gebildeten Übertragungsstrecke in den Stationen empfangen werden, bei welchem die Signale der einen Senderichtung in Sendepausen der anderen Senderichtung über den Lichtwellenleiter (3) übertragen werden, bei welchem als optischer Sender ein eine Sendediode und eine Fotodiode aufweisendes optisches Bauteil verwendet wird und bei welchem die Fotodiode in jeder Station (1,2) während des Sendebetriebs als Monitordiode (7) zur Überwachung der Sendediode und während des Empfangsbetriebs als Empfänger verwendet wird, der in den Sendepausen der eigenen Station die von einer anderen Station kommenden Signale empfängt, dadurch gekennzeichnet,
- daß als optisches Bauteil ein aus Laserdiode (6) als Sendediode und Monitordiode (7) bestehender Lasermodul (4) verwendet wird,
- daß der über die Monitordiode (7) fließende, der empfangenen Lichtleistung proportionale Strom über einen Verstärker (11) einem Empfänger (10) zugeführt wird und
- daß zwischen Monitordiode (7) und Verstärker (11) ein Schalter (12) angeordnet wird, der nur in den Sendepausen des zugehörigen Lasermoduls (4) geschlossen wird.

2. Verfahren nach Anspruch 1, dadurch gekennzeichnet, daß die Laserdiode (6) des Lasermoduls (4) während des Empfangsbetriebs mit einem Strom beaufschlagt wird, der kleiner als ihr Schwellenstrom ist.

3. Verfahren nach Anspruch 1 oder 2, dadurch gekennzeichnet, daß Verstärker (11) und Schalter (12) in ein metallisches Gehäuse (14) eingebettet werden.

## Claims

1. Process for the bidirectional transmission of optical signals between two stations (1, 2) connected by an optical waveguide (3), in which process the signals are emitted in each instance from an optical emitter disposed in the stations and are received at the end of the transmission path formed by the optical waveguide (3) in the stations, in which process the signals of one of the emission directions are transmitted in emission pauses of the other emission direction via the optical waveguide (3), in which process the optical emitter which is employed comprises an optical component exhibiting an emission diode and a photodiode, and in which process the photodiode in each station (1, 2) is used during operation in emission mode as monitor diode (7) to monitor the emission diode and during operation in reception mode as receiver, which receives, in the emission pauses of its own station, the signals coming from another station, characterised in that
- the optical component which is employed comprises a laser module (4) comprising laser diode (6) as emission diode and monitor diode (7),
- the current flowing via the monitor diode (7), which current is proportional to the received optical power, is fed via an amplifier (11) to a receiver (10), and
- a switch (12) is disposed between monitor diode (7) and amplifier (11), which switch is closed only in the emission pauses of the associated laser module (4).

2. Process according to Claim 1, characterised in that the laser diode (6) of the laser module (4) is acted upon, during operation in reception mode, by a current which is smaller than its threshold current.

3. Process according to Claim 1 or 2, characterised in that amplifier (11) and switch (12) are embedded in a metallic housing (14).

## Revendications

1. Procédé de transmission bidirectionnelle de signaux optiques entre deux stations (1,2) reliées par une fibre optique (3), procédé dans lequel les signaux sont respectivement émis par un émetteur optique disposé dans les stations et sont reçus dans les stations à l'extrémité d'une ligne de transmission formée par la fibre optique (3), dans lequel les signaux du premier sens d'émission sont transmis par la fibre optique (3) au cours de pauses d'émission de l'autre sens d'émission, dans lequel on emploie comme émetteur optique un composant optique présentant une diode émettrice et une photodiode et dans lequel dans chaque station (1,2), la photodiode est employée, pendant le fonctionnement en émetteur, comme diode de surveillance (7) pour surveiller la diode émettrice et, pendant le fonctionnement en récepteur, comme récepteur qui, pendant les pauses d'émission de sa propre station, reçoit les signaux provenant de l'autre station, procédé caractérisé par le fait
- que comme composant optique, on emploie un module laser (4) constitué d'une diode laser (6) comme diode émettrice et d'une diode de surveillance (7),
- que le courant, proportionnel à la puissance lumineuse reçue, qui passe par la diode de surveillance (7) est amené à un récepteur (10) par l'intermédiaire d'un amplificateur (11) et
- qu'entre la diode de surveillance (7) et l'amplificateur (11) est disposé un interrupteur (12) qui n'est fermé que pendant les pauses d'émission du module laser correspondant (4).

2. Procédé selon la revendication 1, caractérisé par le fait que pendant le fonctionnement en récepteur, la diode laser (10) du module laser (4) reçoit une intensité qui est inférieure à son intensité de seuil.

3. Procédé selon la revendication 1 ou 2, caractérisé par le fait qu'amplificateur et interrupteur (12) sont enclos dans une enceinte métallique (14).
